# EUROPÄISCHE PATENTSCHRIFT

(11) **EP 3 787 990 B1**
(45) Veröffentlichungstag und Bekanntmachung des Hinweises auf die Patenterteilung: **11.05.2022**
(21) Anmeldenummer: 19716383.5
(22) Anmeldetag: 04.04.2019
(51) Int. Cl.: B65G 49/06, B07C 5/36, B65G 47/64

(54) **SORTIERVERFAHREN UND -VORRICHTUNG ZUM SORTIEREN VON PLATTENFÖRMIGEN GEGENSTÄNDEN, VORZUGSWEISE GLASTAFELZUSCHNITTEN, VERFAHREN UND VORRICHTUNG ZUM HERSTELLEN VON GLASTAFELZUSCHNITTEN MIT EINER DERARTIGEN SORTIERVORRICHTUNG**
SORTING METHOD AND DEVICE FOR SORTING PLATE-SHAPED OBJECTS, PREFERABLY GLASS PANEL CUT PIECES, METHOD AND DEVICE FOR PRODUCING GLASS PANEL CUT PIECES WITH A SORTING DEVICE OF THIS TYPE
PROCÉDÉ ET DISPOSITIF DE TRIAGE D'OBJETS EN FORME DE PLAQUE, DE PRÉFÉRENCE D'ÉBAUCHES DE PANNEUX DE VERRE, PROCÉDÉ ET DISPOSITIF DE PRODUCTION D'ÉBAUCHES DE PANNEUX DE VERRE AVEC UN TEL DISPOSITIF DE TRIAGE

(30) Priorität: 04.05.2018 DE 102018206974; 23.07.2018 DE 102018117765; 23.10.2018 DE 102018218141
(43) Veröffentlichungstag der Anmeldung: 10.03.2021
(73) Patentinhaber: HEGLA GmbH & Co. KG, 37688 Beverungen (DE)
(72) Erfinder: RIEPE, Dieter, 37688 Beverungen (DE); ROTERMUND, Christian, 37671 Höxter (DE); SCHOISSWOHL, Markus, 1160 Wien (AT); HÖTGER, Bernhard, 37697 Lauenförde (DE); WERNEKE, Mirko, 37688 Beverungen (DE)
(74) Vertreter: Dr. Solf & Zapf Patent- und Rechtsanwalts PartG mbB
(86) Internationale Anmeldenummer: PCT/EP2019/058573
(87) Internationale Veröffentlichungsnummer: WO 2019/211058

(56) Entgegenhaltungen:
- EP-A1- 2 543 446
- EP-A2- 1 323 651

## Beschreibung

Die vorliegende Erfindung betrifft ein Sortierverfahren und eine Sortiervorrichtung zum Sortieren von plattenförmigen Gegenständen, vorzugsweise Glastafelzuschnitten, sowie eine Vorrichtung zum Herstellen von zugeschnittenen Glastafeln mit einer Schneidanlage zum Schneiden von Glasrohtafeln in einzelne Glastafelzuschnitte und mit einer derartigen Sortiervorrichtung und ein Verfahren zur Herstellung von zugeschnittenen Glastafeln.

Eine gattungsgemäße Sortiervorrichtung geht z. B. aus der EP 1 323 651 A1 hervor. Die EP 1 323 651 A1 offenbart eine Sortiervorrichtung zum Sortieren von Glastafelzuschnitten, wobei eine die Glastafelzuschnitte zwischenspeichernde und sortierende Zwischenspeicher- und Sortiereinrichtung vorhanden ist, die einen nicht verschieblichen Zwischenspeicher aufweist und an die die Glastafelzuschnitte eines Fertigungslaufs insbesondere kontinuierlich übergebbar sind. Dabei sind zudem Einrichtungen vorhanden, in welche die Glastafelzuschnitte aus dem ortsfesten Zwischenspeicher sortierend einschleusbar sind. Dem ortsfesten Zwischenspeicher ist ein verfahrbares Shuttle vorgeordnet und neben dem Zwischenspeicher ist ein weiteres verfahrbares Shuttle gegenüberliegend dem ersten Shuttle angeordnet.

Die EP 1 323 651 A1 offenbart zudem ein Verfahren zum Sortieren von Glastafeln, wobei die Glastafeln eines Fertigungslaufs von einer Bearbeitungslinie sortierend in Speichereinrichtungen oder Weiterverarbeitungslinien eingeschleust werden, wobei eine Zwischenspeicher- und Sortiereinrichtung verwendet wird, die mit den Glastafelzuschnitten eines Fertigungslaufs kontinuierlich beschickt wird und die Glastafeln sortierend zuordnend in Speichereinrichtungen oder Weiterbearbeitungslinien einschleust, wobei die Zwischenspeicher- und Sortiereinrichtung eine Mehrzahl von verfahrbaren Zwischenspeichern aufweist, die unabhängig voneinander in eine Belade- oder Entladeposition verfahren werden. Die Zwischenspeicher werden entlang einer Verfahrbahn verfahren, wobei die Zwischenspeicher zum Überholen eines zweiten Zwischenspeichers paternosterartig von dem Verfahrweg abgehoben und über den zweiten oder weitere Zwischenspeicher versetzt werden.

Aus der EP 0 620 171 A1 geht eine Anlage zum Sortieren von geschnittenen Glasscheiben hervor. Die geschnittenen Glasscheiben werden mittels eines zwei Fächer aufweisenden Sortierwagens in nebeneinander angeordnete Fächerwagen einsortiert. Wenn die Fächerwagen voll besetzt sind, werden sie in eine genau definierte Position vor eine Übergabevorrichtung zum Überführen der Glasscheiben in eine Weiterbearbeitungsanlage, beispielsweise eine Isolierglaslinie, gebracht. Aus den Fächern werden in einer vorprogrammierten Reihenfolge die Glasscheiben entnommen.

Die EP 0 048 334 A1 offenbart ebenfalls eine Vorrichtung zum Sortieren von unsortierten Glasscheiben einer Glasschneideanlage. Die geschnittenen Glasscheiben werden in einen Fächerwagen unsortiert eingeführt. Anschließend wird der Fächerwagen zu einer Sortiervorrichtung gebracht, welche mehrere, nebeneinander angeordnete, Fächerwagen aufweist. Die Sortiervorrichtung weist außerdem einen Verschiebewagen auf, der den aus der Schneidanlage kommenden Fächerwagen aufnimmt und der längs der aufgereihten Fächerwagen verfahrbar ist. Des Weiteren weist der Verschiebewagen eine entlang dem Verschiebewagen verfahrbare Übergabevorrichtung zur Übergabe der geschnittenen Glasscheiben von dem Fächerwagen an die aufgereihten Fächerwagen auf.

Die WO 95/25688 A1 offenbart ein Verfahren zum Sortieren von Platten, insbesondere von Glastafelzuschnitten, wobei die Glastafelzuschnitte in Fächer eines Fächerregals abgestellt werden und anschließend die Glastafelzuschnitte aus dem Fächerregal in einen Fächerwagen übergeben werden. Dabei wird das Fach des Fächerwagens, in das der Glastafelzuschnitt abzustellen ist, gegenüber dem Fach des Fächerregals, in dem der Glastafelzuschnitt aufgenommen ist, durch Verschieben des Fächerwagens entlang dem Fächerregal ausgerichtet.

Die EP 2 543 446 A1 offenbart einen Scheibensortierer zum Zwischenlagern und Sortieren von Glasscheiben. Der Scheibensortierer weist ein aus mehreren Regalfächern bestehendes Regal auf, wobei die Regalfächer durch Seitenwände voneinander getrennt werden. Die Regalfächer dienen zur Aufnahme der Glasscheiben. Vor dem Regal ist ein Förderwagen auf Schienen hin und her verfahrbar. Zum Einsortieren in das Regal wird auf den Förderwagen an einer entsprechenden Belade- und Entladestelle eine einzusortierende Glasscheibe auf den Förderwagen befördert und von diesem zu dem jeweiligen Regalfach verfahren und in dieses einsortiert. Wenn bei Herausnahme von einzelnen Glasscheiben andere Glasscheiben im Weg sind, werden diese in einem freien Regalfach gesammelt. Infolgedessen enthalten die Regalfächer des Regals ausschließlich sortierte Glasscheiben.

Aufgabe der vorliegenden Erfindung ist die Bereitstellung einer Sortiervorrichtung zum Sortieren von plattenförmigen Gegenständen, vorzugsweise von geschnittenen Glastafeln, die einfach und platzsparend aufgebaut ist und eine einfache, schnelle und kostengünstige Sortierung gewährleistet.

Weitere Aufgabe der Erfindung ist die Bereitstellung eines einfachen und kostengünstigen Sortierverfahrens zum Sortieren der plattenförmigen Gegenstände, vorzugsweise geschnittenen Glastafeln.

Zudem ist Aufgabe der Erfindung die Bereitstellung einer Vorrichtung zum Herstellen von zugeschnittenen Glastafeln mit einer Schneidanlage zum Schneiden von Glasrohtafeln in einzelne Glastafelzuschnitte und mit einer derartigen Sortiervorrichtung und eines Verfahren zur Herstellung von zugeschnittenen Glastafeln.

Diese Aufgaben werden durch eine Sortiervorrichtung gemäß Anspruch 1, ein Sortierverfahren gemäß Anspruch 8, eine Vorrichtung gemäß Anspruch 11 und ein Verfahren gemäß Anspruch 14 gelöst. Vorteilhafte Weiterbildungen der Erfindung sind in den sich jeweils anschließenden Unteransprüchen gekennzeichnet.

Im Folgenden wird die Erfindung anhand einer Zeichnung beispielhaft näher erläutert. Es zeigen:
- Figur 1:: Stark vereinfacht und schematisch eine Draufsicht auf eine erfindungsgemäße Vorrichtung mit zwei Schneidanlagen und mit einer erfindungsgemäßen Sortiervorrichtung gemäß einer ersten Ausführungsform der Erfindung
- Figur 2:: Stark vereinfacht und schematisch eine Draufsicht auf eine erfindungsgemäße Vorrichtung mit zwei Schneidanlagen und mit einer erfindungsgemäßen Sortiervorrichtung gemäß einer weiteren Ausführungsform der Erfindung
- Figur 3:: Stark vereinfacht und schematisch eine Draufsicht auf eine erfindungsgemäße Vorrichtung gemäß einer weiteren Ausführungsform der Erfindung mit einer zusätzlichen ortsfesten Speichereinrichtung

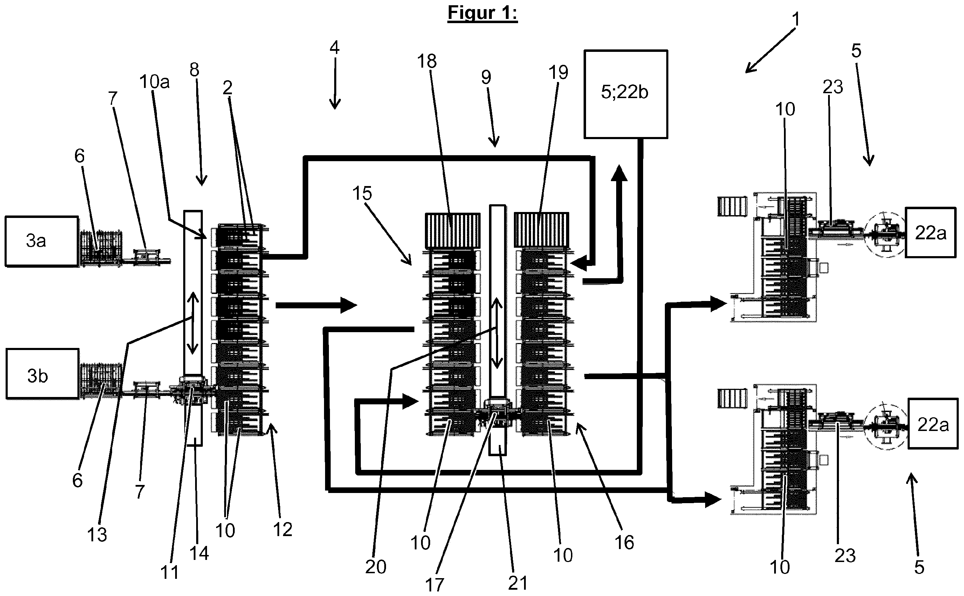

Die erfindungsgemäße Vorrichtung 1 (Fig. 1, 2, 3) zur Herstellung von zugeschnittenen Glastafeln bzw. Glastafelzuschnitten 2 weist zumindest eine an sich bekannte Schneidlinie bzw. Schneidanlage 3a;b, eine erfindungsgemäße Sortiervorrichtung 4 und zumindest eine Weiterbearbeitungsanlage bzw. Weiterbearbeitungslinie 5 auf.

Die Glastafelzuschnitte 2 bestehen vorzugsweise aus Floatglas und/oder aus Verbundglas. Es handelt sich somit vorzugsweise um Floatglastafelzuschnitte und/oder Verbundglastafelzuschnitte.

Infolgedessen weist die Vorrichtung 1 vorzugsweise eine Verbundglasschneidanlage 3a und eine Floatglasschneidanlage 3b auf. In den Schneidanlagen 3a;b werden in an sich bekannter Weise Glasrohtafeln in die jeweiligen einzelnen Glastafelzuschnitte 2 zerteilt.

Am Ende der jeweiligen Schneidanlage 3a;b ist vorzugsweise jeweils ein Kipptisch 6 vorhanden, mittels dem die Glastafelzuschnitte 2 von ihrer horizontalen Lage in eine vertikale oder etwas zur Vertikalen geneigte Position gebracht werden. An den Kipptisch 6 schließt sich vorzugsweise ein Fördermittel 7 an. Vorzugsweise handelt es sich hierbei um einen Pufferförderer. Mittels des Fördermittels 7 wird jeweils ein einzelner Glastafelzuschnitt 2 an die Sortiervorrichtung 4 übergeben bzw. in diese eingeschleust. Die Übergabe an die Sortiervorrichtung 4 kann aber auch direkt von dem Kipptisch 6 erfolgen.

Die erfindungsgemäße Sortiervorrichtung 4 weist eine Aufnahmestation 8 und eine Sortierstation 9 auf.

Die Aufnahmestation 8 weist mehrere, nebeneinander angeordnete, verfahrbare Fächergestelle 10 und ein verfahrbares Aufnahme- und Übergabeshuttle 11 auf.

Die Fächergestelle 10 dienen zur Aufnahme der Glastafelzuschnitte 2 und weisen dazu in an sich bekannter Weise mehrere Fächer auf. Insbesondere weist ein Fächergestell 10 mindestens 20 Fächer, bevorzugt mindestens 50 Fächer, zur Aufnahme jeweils einer oder mehrerer Glastafelzuschnitte 2 auf. In den Fächern sind die Glastafelzuschnitte 2 vertikal ausgerichtet oder etwas zur Vertikalen geneigt angeordnet. Die Fächergestelle 10 können pro Fach auch mehrere hintereinander angeordnete Glastafelzuschnitte 2 aufnehmen.

Die Fächergestelle 10 weisen zudem jeweils eine offenes Einführ- und Entnahmeende 10a auf, an dem die Glastafelzuschnitte 2 in das Fächergestell 10 eingeführt werden bzw. aus diesem entnommen werden. Die in einer Fächergestellreihe 12 nebeneinander angeordneten Fächergestelle 10 sind dabei alle so angeordnet, dass die Einführ- und Entnahmeenden 10a jeweils zu dem Aufnahme- und Übergabeshuttle 11 hinweisen. Sie weisen nicht zu dem benachbarten Fächergestell 10 hin.

Des Weiteren weisen die Fächergestelle 10 vorzugsweise keine Fördermittel zum Hinein- und Herausfördern der Glastafelzuschnitte 2 in und aus dem Fächergestell 10 auf.

Bei den Fächergestellen 10 handelt es sich vorzugsweise um Fächerwagen. Des Weiteren können aber auch Fächergestelle 10 verwendet werden, die mittels fahrerlosen Transportfahrzeugen (AGV=Automated guided vehicle) verfahren werden. Da diese Fächergestelle 10 keine Räder aufweisen, sind sie deutlich leichter als die Fächerwagen. Somit handelt es sich bei den Fächerwagen um verfahrbare Fächergestelle 10 mit Rädern. Die Fächergestelle 10, insbesondere die Fächerwagen 10, sind im Gegensatz zu dem Aufnahme- und Übergabeshuttle 11 jeweils frei verfahrbar, das heißt nicht nur auf vorgegebenen Bahnen verfahrbar, wie das Aufnahme- und Übergabeshuttle 11, sondern unabhängig von Verfahrbahnen bzw. Schienen.

Das Aufnahme- und Übergabeshuttle 11 dient zur Aufnahme der Glastafelzuschnitte 2 aus der jeweiligen Schneidanlage 3a;b, insbesondere von dem Fördermittel 7, und zur Übergabe der Glastafelzuschnitte 2 an die Fächergestelle 10.

Das Aufnahme- und Übergabeshuttle 11 ist der Fächergestellreihe 12 in Produktionsreihenfolge bzw. Bearbeitungsreihenfolge bzw. Verarbeitungsreihenfolge vorgeordnet. Zudem ist das Aufnahme- und Übergabeshuttle 11 parallel zu der horizontalen Fächergestellreihe 12 in eine horizontale Shuttleförderrichtung 13 entlang einer fest vorgegebenen Verfahrbahn, bevorzugt auf Schienen 14, automatisiert hin- und her verfahrbar. Zum Verfahren des Aufnahme- und Übergabeshuttles 11 sind entsprechende Antriebs- und Steuermittel vorhanden. Vorzugsweise weist das Aufnahme- und Übergabeshuttle 11 einen Antriebsmotor und eine Steuereinrichtung auf. Bei dem Antriebsmotor handelt es sich vorzugsweise um einen Linearmotor. Der Antrieb kann aber auch über einen Rotationsmotor in Kombination mit einem Ritzel und einer Zahnstange erfolgen. Auch kann der Antrieb über einen Zahnriemen und einen ortsfesten Antriebsmotor erfolgen. Auch kann die Steuereinrichtung ortsfest sein und mit dem Aufnahme- und Übergabeshuttle 11 in Signal übertragender Weise verbunden sein.

Vorzugsweise weist das Aufnahme- und Übergabeshuttle 11 einen oder mehrere Greifer auf, mit denen die Glastafelzuschnitte 2 von dem jeweiligen Fördermittel 7 auf das Aufnahme- und Übergabeshuttle 11 und von dem Aufnahme-und Übergabeshuttle 11 in die Fächergestelle 10 befördert werden können. Das Aufnahme-und Übergabeshuttle 11 kann aber beispielsweise auch Rollen oder Riemen zum Fördern der Glastafelzuschnitte 2 in die Fächergestell 10 und umgekehrt aufweisen.

Das Aufnahme- und Übergabeshuttle 11 hat vorzugsweise lediglich ein einziges oder zwei Fächer (nicht dargestellt), wobei pro Fach jeweils ein einziger Glastafelzuschnitt 2 oder mehrere Glastafelzuschnitte 2 hintereinander bzw. zueinander fluchtend aufgenommen werden können.

Vorzugsweise weist das Aufnahme- und Übergabeshuttle 11 höchstens jedoch 10, bevorzugt höchstens 5, Fächer auf. Weist das Aufnahme- und Übergabeshuttle 11 zwei Glastafelzuschnitte 2 nebeneinander auf, was bevorzugt ist, handelt es sich um ein Doppelshuttle.

Die separate Sortierstation 9 der erfindungsgemäßen Sortiervorrichtung 4 ist der Aufnahmestation 8 in Produktionsreihenfolge bzw. Bearbeitungsreihenfolge bzw. Verarbeitungsreihenfolge nachgeordnet.

Die Sortierstation 9 weist gemäß einer ersten Ausführungsform (Fig. 1) eine erste Fächergestellreihe 15, eine zweite Fächergestellreihe 16, ein dazwischen angeordnetes Sortiershuttle 17 und vorzugsweise zumindest einen ersten ortsfesten Speicher 18 und einen zweiten ortsfesten Speicher 19 auf. Die zweite Fächergestellreihe 16 ist der ersten Fächergestellreihe 15 in Produktionsreihenfolge bzw. Bearbeitungsreihenfolge bzw. Verarbeitungsreihenfolge gesehen nachgeordnet.

Die beiden horizontalen Fächergestellreihen 15; 16 der Sortiervorrichtung 4 weisen jeweils mehrere, nebeneinander angeordnete, verfahrbare Fächergestelle 10 auf. Die in einer Fächergestellreihe 15; 16 nebeneinander angeordneten Fächergestelle 10 sind dabei alle so angeordnet, dass die Einführ- und Entnahmeenden 10a jeweils zu dem Sortiershuttle 17 hinweisen. Bzw. die Einführ- und Entnahmeenden 10a der Fächergestelle 10 der beiden Fächergestellreihen 15; 16 weisen aufeinander zu.

Das Sortiershuttle 17 ist parallel zu den beiden horizontalen Fächergestellreihen 15;16 zwischen diesen in eine horizontale Shuttleförderrichtung 20, entlang einer fest vorgegebenen Verfahrbahn, bevorzugt auf Schienen 21, automatisiert hin- und her verfahrbar. Zum Verfahren des Sortiershuttles 17 sind wiederum entsprechende Antriebs- und Steuermittel vorhanden. Der Antrieb und die Steuerung des Sortiershuttles 17 erfolgt analog wie beim Aufnahme- und Übergabeshuttle 11.

Vorzugsweise weist das Sortiershuttle 17 ebenfalls einen oder mehrere Greifer auf, mit denen die Glastafelzuschnitte 2 von den Fächergestellen 10 auf das Sortiershuttle 17 und von dem Sortiershuttle 17 in andere Fächergestelle 10 einsortiert werden können. Das Sortiershuttle 17 kann aber beispielsweise ebenfalls auch Rollen oder Riemen zum Fördern der Glastafelzuschnitte 2 in die Fächergestelle 10 und umgekehrt aufweisen.

Das Sortiershuttle 17 hat vorzugsweise ebenfalls lediglich ein einziges oder zwei Fächer (nicht dargestellt), wobei pro Fach jeweils ein einziger Glastafelzuschnitt 2 oder mehrere Glastafelzuschnitte 2 hintereinander bzw. zueinander fluchtend aufgenommen werden können.

Vorzugsweise weist das Sortiershuttle 17 höchstens jedoch 10, bevorzugt höchstens 5, Fächer auf. Weist das Sortiershuttle 17 zwei Glastafelzuschnitte 2 nebeneinander auf, was bevorzugt ist, handelt es sich um ein Doppelshuttle.

Der erste ortsfeste Speicher 18 ist zudem an einem Stirn- bzw. Kopfende der ersten Fächergestellreihe 15 und der zweite ortsfeste Speicher 19 ist an einem Stirn- bzw. Kopfende der zweiten Fächergestellreihe 16 angeordnet. Auch die beiden ortsfesten Speicher 18;19 können von dem Sortiershuttle 17 bedient werden.

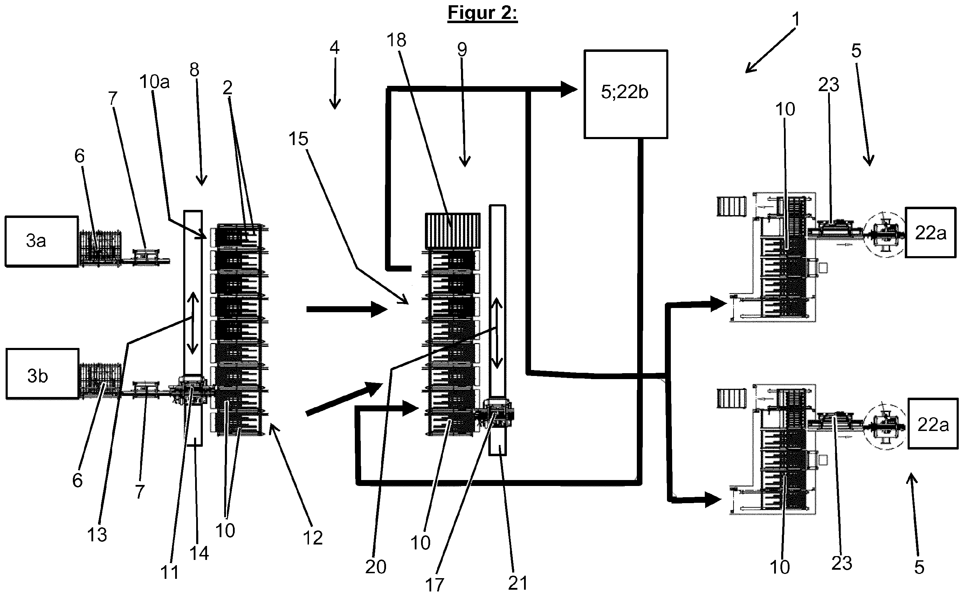

Gemäß einer weiteren Ausführungsform (Fig. 2) weist die Sortierstation 9 lediglich eine einzige Fächergestellreihe 15 auf.

Bei der Weiterbearbeitungsanlage 5 handelt es sich vorzugsweise um eine Isolierglaslinie 22a zur Weiterbearbeitung der Glastafelzuschnitte 2 aus Isolierglas oder eine Tempervorrichtung 22b zum Tempern der Glastafelzuschnitte 2 aus Floatglas oder um eine Vorrichtung zur Kantenbearbeitung.

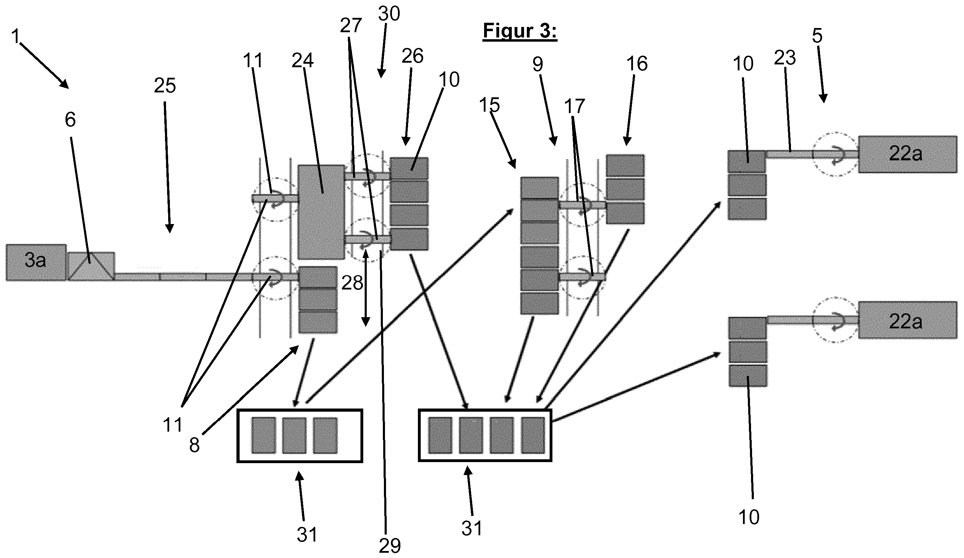

Gemäß einer weiteren Ausführungsform der Erfindung (Fig. 3) weist die Aufnahmestation 8 zusätzlich zu den Fächergestellen 10 zumindest eine ortsfeste Speichereinrichtung 24 zum Speichern der Glastafelzuschnitte 2 auf. Die Speichereinrichtung 24 ist neben der Fächergestellreihe 12 und ebenfalls benachbart zu der Verfahrbahn des Aufnahme- und Übergabeshuttles 11 angeordnet bzw. dieser in Bearbeitungsreihenfolge direkt nachgeordnet, so dass die Glastafelzuschnitte 2 von dem Aufnahme- und Übergabeshuttle 11 alternativ zu den Fächergestellen 10 auch in die Fächergestellreihe 12 eingeführt werden können. Die Speichereinrichtung 24 weist hierzu in an sich bekannter Weise mehrere vertikale oder zur Vertikalen geneigte Fächer zur Aufnahme der Glastafelzuschnitte 2 auf.

Zudem ist der Speichereinrichtung 24 in Bearbeitungsreihenfolge nachgeordnet eine weitere Fächergestellreihe 26 mit nebeneinander angeordneten Fächergestellen 10 vorhanden. Und zwischen der Speichereinrichtung 24 und der Fächergestellreihe 26 ist zumindest ein weiteres Sortiershuttle 27, vorzugsweise zwei, vorhanden, welches in eine horizontale Shuttleförderrichtung 28 entlang einer fest vorgegebenen Verfahrbahn, bevorzugt auf Schienen 29, automatisiert hin- und her verfahrbar ist. Dazu sind entsprechende Antriebmittel vorhanden. Die Fächergestellreihe 26 und das weitere Sortiershuttle 27 bilden also eine weitere Sortierstation 30.

Des Weiteren weist die Vorrichtung 1 gemäß der weiteren Ausführungsform vorzugsweise eine Vorsortierstrecke 25 auf, die der Aufnahmestation 8 in Bearbeitungsreihenfolge vorgeordnet ist. Die Vorsortierstrecke 25 ist beispielsweise wie eine Einlaufstrecke gemäß der deutschen Patentanmeldung DE 10 2018 214 131.2 ausgebildet. Sie weist somit vorzugsweise eine mehrstöckige, vorzugsweise doppelstöckige, Transport- und Hubeinrichtung und eine dieser in Bearbeitungsreihenfolge nachgeordnete, mehrstöckige, vorzugsweise doppelstöckige, Speicherstrecke auf.

In der Transport- und Hubeinrichtung werden die Glastafelzuschnitte teilweise auf das oder die oberen Stockwerk oder der oberen Stockwerke der Transportund Hubeinrichtung angehoben. Infolgedessen dient die Transport- und Hubeinrichtung zum mehrstöckigen, bevorzugt doppelstöckigen, Transport der Glastafelzuschnitte 2 in horizontaler Richtung. Die Speicherstrecke ist ebenfalls mehrstöckig, vorzugsweise doppelstöckig, ausgebildet und weist zwei übereinander angeordnete Stockwerke bzw. Speicherebenen auf, in denen die Glastafelzuschnitte 2 übereinander in horizontaler Richtung transportiert werden.

Des Weiteren können auch die anderen Elemente der Vorrichtung 1, insbesondere die beiden Shuttles 11;17, die Fächergestelle 10, die Speicher 18;19, die Speichereinrichtung 24 ebenfalls mehrstöckig, bevorzugt doppelstöckig ausgebildet sein.

Des Weiteren weist die Vorrichtung 1 vorzugsweise Parkplätze 31 auf, auf denen die Fächergestelle 10 befüllt oder unbefüllt vorübergehend geparkt werden können, wenn sie nicht gebraucht werden oder in einer Warteposition sind.

Das Vorhandensein der zusätzlichen Speichereinrichtung 24 und/oder der doppelstöckigen Einlaufstrecke 25 und/oder der doppelstöckigen Ausbildung der anderen Elemente der Vorrichtung 1 und/oder der Parkplätze 31 ist dabei selbstverständlich bei allen Ausführungsformen der Vorrichtung 1 möglich.

Im Folgenden werden nun das erfindungsgemäße Herstellungsverfahren und das erfindungsgemäße Sortierverfahren unter Verwendung der erfindungsgemäßen Vorrichtungen 1;4 näher erläutert:
In der jeweiligen Schneidanlage 3a;b werden die, vorzugsweise aus Verbundglas oder Floatglas bestehenden, Glasrohtafeln in an sich bekannter Weise in einzelne Glastafelzuschnitte 2 geschnitten bzw. zerteilt. Die zugeschnittenen Glastafelzuschnitte 2 werden dann vom Kipptisch 6 von ihrer horizontalen Lage in eine zumindest im Wesentlichen vertikale Position gebracht. Mittels des Fördermittels 7 wird der aufgestellte Glastafelzuschnitt 2 zu dem Aufnahme- und Übergabeshuttle 11 der Aufnahmestation 8 befördert und dort von dem Aufnahme- und Übergabeshuttle 11 übernommen.

Je nachdem, wie viele Fächer das Aufnahme- und Übergabeshuttle 11 aufweist, kann es eine oder mehrere Glastafelzuschnitte 2 aufnehmen.

Das Aufnahme- und Übergabeshuttle 11 verfährt nun den oder die aufgenommenen Glastafelzuschnitte 2 zu einem der bereit stehenden, wartenden Fächergestelle 10 der Aufnahmestation 8 und übergibt den oder die Glastafelzuschnitte 2 an das Fächergestell 10. Das Befüllen der Fächergestelle 10 erfolgt dabei ohne Sortierung, das heißt, die Fächergestelle 10 werden der Reihe nach mit den Glastafelzuschnitten 2 in der Reihenfolge, in der die Glastafelzuschnitte 2 vom Zuschnitt ankommen, befüllt, ohne dass eine Sortierung stattfindet. Die Fächergestelle 10 werden also mit den Glastafelzuschnitten 2 in chaotischer (Zuschnitt)reihenfolge befüllt.

Die Reihenfolge der Glastafelzuschnitte 2, also in welchem Fach welches Fächergestells 10 welcher Glastafelzuschnitt 2 angeordnet ist, wird dabei, vorzugsweise automatisiert, gespeichert.

Dabei können die Glastafelzuschnitte 2 vom Aufnahme- und Übergabeshuttle 11 auch um 180° gedreht werden, damit z.B. die Schichtseite wechselt. Dazu ist das Oberteil des Aufnahme- und Übergabeshuttles 11 in an sich bekannter Weise um eine vertikale Achse drehbar.

Anschließend werden die mit den unsortierten Glastafelzuschnitten 2 in chaotischer Reihenfolge befüllten Fächergestelle 10 manuell oder automatisiert gesteuert zur Sortierstation 9 verfahren. Im Falle des automatisierten Verfahrens sind entsprechende Antriebs- und Steuermittel für die Transportfahrzeuge oder die Fächerwagen vorhanden. Die Fächergestelle 10 werden dort in die erste und/oder zweite Fächergestellreihe 15; 16 der Sortierstation 9 eingereiht.

Nun erfolgt das automatisierte Umsortieren der unsortierten Glastafelzuschnitte 2 mittels des Sortiershuttles 17. Die Glastafelzuschnitte 2 werden aus den mit den unsortierten Glastafelzuschnitten 2 befüllten Fächergestellen 10 in der Reihenfolge und Zusammenstellung in andere bzw. weitere Fächerwagen 10 der ersten oder zweiten Fächergestellreihe 15;16 einsortiert, die für den nachfolgenden Prozess erforderlich ist. Das sortierende Befüllen der Fächergestelle 10 erfolgt dabei ohne Verfahren der Fächergestelle 10 der ersten und zweiten Fächergestellreihe 15;16. Nur das Sortiershuttle 17 verfährt hierzu.

Bei der zweiten Ausführungsform mit lediglich einer Fächergestellreihe 15 werden die Glastafelzuschnitte 2 aus den mit den unsortierten Glastafelzuschnitten 2 befüllten Fächergestellen 10 in weitere bzw. andere Fächergestelle 10 derselben Fächergestellreihe 15 einsortiert. Bei den weiteren bzw. anderen Fächergestellen 10 kann es sich dabei auch um Fächergestelle 10 handeln, die zuvor ebenfalls mit unsortierten Glastafelzuschnitten 2 befüllt waren oder dies noch sind.

Wiederum können die Glastafelzuschnitte 2 vom Sortiershuttle 17 auch um 180° gedreht werden, damit z.B. die Schichtseite wechselt. Dazu ist das Oberteil des Sortiershuttles 17 in an sich bekannter Weise um eine vertikale Achse drehbar.

Die sortierte Reihenfolge der Glastafelzuschnitte 2, also in welchem Fach welches Fächergestells 10 welcher Glastafelzuschnitt 2 angeordnet ist, wird dabei wiederum, vorzugsweise automatisiert, gespeichert.

Zudem können auch Fächergestelle 10 mit Glastafelzuschnitten 2 aus anderen Prozessen als dem Schneidprozess, z.B. mit Glastafelzuschnitten 2 aus der Tempervorrichtung 22b, unsortiert in die erste oder zweite Fächergestellreihe 15;16 der Sortierstation 4 eingereiht werden und die darin enthaltenen Glastafelzuschnitte 2 in ein anderes Fächergestell 10 der Sortierstation 4 einsortiert werden.

Des Weiteren können in den beiden ortsfesten Speichern 18;19 auch Glastafelzuschnitte 2 eingelagert bzw. zwischengespeichert werden, wenn sie erst später benötigt werden.

Von der Sortierstation 4 werden dann die mit den in der Produktionsreihenfolge sortierten Glastafelzuschnitten 2 befüllten Fächergestelle 10 zu der jeweiligen Weiterbearbeitungsanlage 5;22a;b gefahren, wo sie dann in der Produktionsreihenfolge dem jeweiligen Prozess zugeführt werden. Das Verfahren der Fächergestelle 10 erfolgt wiederum jeweils manuell oder vorzugsweise automatisiert gesteuert. Im Falle des automatisierten Verfahrens sind entsprechende Antriebs- und Steuermittel vorhanden.

In der jeweiligen Weiterbearbeitungsanlage 5;22a;b werden die Glastafelzuschnitte 2 z.B. mittels einer stationären Übergabeeinrichtung 23 aus den Fächerwagen 10 entnommen. Die Übergabeeinrichtung 23 kann dazu Greifer oder andere Mittel aufweisen. Und zur Entnahme werden die Fächerwagen 10 an der Übergabeeinrichtung 23 entlang bewegt.

Bei der weiteren Ausführungsform der Erfindung gemäß Figur 3 durchlaufen die Glastafelzuschnitte 2 vor der Aufnahmestation 8 die mehrstöckige, vorzugsweise doppelstöckige, Einlaufstrecke 25.

In der Einlaufstrecke 25 wird ein Teil der Glastafelzuschnitte 2 in das oder die oberen Stockwerken angehoben und dort weiter transportiert und der andere Teil wird unten transportiert. Aus der Einlaufstrecke 25 werden die Glastafelzuschnitte 2 der Reihe nach, wie sie aus der Einlaufstrecke 25 ankommen, in chaotischer Reihenfolge, mittels des mehrstöckigen Aufnahme- und Übergabeshuttles 11 in die mehrstöckigen Fächergestelle 10 eingefördert.

Zudem ist gemäß der weiteren Ausführungsform, wie bereits erläutert, die ortsfeste Speichereinrichtung 24 vorhanden. In diese kann ebenfalls ein Teil der Glastafelzuschnitte 2 in chaotischer Reihenfolge mittels des Aufnahme- und Übergabeshuttles 11 eigefördert werden. Diese Glastafelzuschnitte 2 werden dann mittels des weiteren Sortiershuttles 27 in die Fächergestelle 10 der weiteren Fächergestellreihe 26 einsortiert. Die Fächergestelle 10 mit den sortierten Glastafelzuschnitten 2 werden dann analog zu den Fächergestellen 10 der ersten Sortierstation 4 zur Weiterbearbeitungsanlage 5;22a;b gefahren.

Vorteil der Erfindung ist unter anderem, dass die verfahrbaren Fächergestelle 10 mobile, räumlich entkoppelte Zwischenspeicher darstellen und eine deutlich einfachere Lösung als große, ortsfeste Zwischenspeicher darstellen.

Durch die der Sortierstation 9 vorgeschaltete Aufnahmestation 8, ist zudem ein zusätzlicher Puffer vorhanden, so dass keine Blockierung einer der Stationen 8;9 auftritt.

Die Erfindung ermöglicht zudem ein schnelles Befüllen der Fächergestelle 10. Es sind keine langen Positionierfahrten notwendig.

Des Weiteren können die mobilen Fächergestelle 10 auch räumlich weit auseinanderliegende Prozesse bedienen.

Im Rahmen der Erfindung liegt es dabei selbstverständlich auch, anstelle mittels des Aufnahme-und Übergabeshuttles 11 die Befüllung der Glastafelzuschnitte 2 manuell oder mittels eines anderen Sortiermittels durchzuführen.

Des Weiteren liegt es im Rahmen der Erfindung, dass mehrere Aufnahme- und Übergabeshuttles 11, vorzugsweise zwei, und/oder mehrere, vorzugsweise zwei, Sortiershuttles 17;27 vorhanden sind. Die mehreren Aufnahme- und Übergabeshuttles 11 bzw. mehreren Sortiershuttles 17;27 verfahren dabei jeweils auf derselben Verfahrbahn.

Auch kann das Fördermittel 7, insbesondere der Pufferförderer, nicht nur eine einzige, sondern zum Beispiel auch mehrere, bevorzugt zwei, Glastafelzuschnitte 2 gleichzeitig auf das Aufnahme- und Übergabeshuttle 11 fördern. Dies hängt insbesondere auch davon ab, wieviel Glastafelzuschnitte 2 das Aufnahme- und Übergabeshuttle 11 nebeneinander aufnehmen kann. In diesem Fall weist das Fördermittel 7, insbesondere der Pufferförderer, mehrere, bevorzugt zwei, nebeneinander angeordnete Fächer zur Aufnahme jeweils eines Glastafelzuschnitts 2 oder mehrerer Glastafelzuschnitte 2 hintereinander auf.

Können das Aufnahme- und Übergabeshuttle 11 und/oder das Sortiershuttle 17;27 jeweils mehrere, bevorzugt zwei, Glastafelzuschnitte 2 nebeneinander aufnehmen, können in besonders vorteilhafter Weise auch mehrere, vorzugsweise zwei, Glastafelzuschnitte 2 gleichzeitig jeweils von dem jeweiligen Shuttle 11;17;27 auf einen Fächerwagen 10 gefördert werden.

Insbesondere bei dem Aufnahme- und Übergabeshuttle 11 ist dies vorteilhaft. Beispielsweise werden dann zunächst die Fächer Nr. 1 und 25 eines Fächerwagens 10 der Aufnahmestation 8 befüllt und im Anschluss daran die Fächer 2 und 26 des Fächerwagens 10. Dadurch werden die Taktzeiten erheblich reduziert.

Selbstverständlich können von dem jeweiligen Shuttle 11;17;27 auch mehr als zwei Glastafelzuschnitte 2 gleichzeitig in einen Fächerwagen 10 übergeben werden, je nachdem, wie viele Glastafelzuschnitte 2 das Shuttle 11;17 aufnehmen kann. Bevorzugt sind die Shuttle 11;17;27 jedoch als Doppelshuttle ausgebildet.

Des Weiteren können vom Sortiershuttle 17;27 in vorteilhafter Weise auch mehrere, bevorzugt zwei, Glastafelzuschnitte 2 gleichzeitig von einem Fächerwagen 10 oder aus der Speichereinrichtung 24 auf das Sortiershuttle 17;27 befördert werden.

Die Übergabeeinrichtung 23 kann ebenfalls so gestaltet sein, dass sie einen einzigen Glastafelzuschnitt 2 oder mehrere, bevorzugt zwei, zueinander benachbarte Glastafelzuschnitte 2 gleichzeitig aus dem Fächerwagen 10 entnehmen kann. Beispielsweise kann die Übergabeeinrichtung 23 dann zunächst aus den Fächern Nr. 1 und 25 und anschließend aus den Fächern 2 und 26 des jeweiligen Fächerwagens 10 Glastafelzuschnitte 2 entnehmen. In diesem Fall weist die Übergabeeinrichtung 23 mehrere, bevorzugt zwei, nebeneinander angeordnete Fächer zur Aufnahme jeweils eines Glastafelzuschnitts 2 oder mehrerer Glastafelzuschnitte 2 hintereinander auf.

Zudem liegt es im Rahmen der Erfindung, dass es sich bei den Glastafelzuschnitten 2 um zugekaufte Glastafelzuschnitte 2 handelt. Das heißt, die Vorrichtung 1 muss keine Schneidanlage 3a;b aufweisen oder ein Teil der Glastafelzuschnitte 2 ist zugekauft.

Zudem können mit der erfindungsgemäßen Sortiervorrichtung 4 auch andere plattenförmige Gegenstände außer Glastafelzuschnitte 2, insbesondere Plexiglasplatten, Keramikplatten und/oder Holzplatten, sortiert werden.

## Patentansprüche

1. Sortiervorrichtung (4) zum Sortieren von plattenförmigen Elementen, vorzugsweise Glastafelzuschnitten (2), aufweisend:
a) eine Aufnahmestation (8) mit mehreren, bevorzugt in einer Fächergestellreihe (12) nebeneinander angeordneten, Fächergestellen (10) mit darin aufgenommenen, unsortierten plattenförmigen Elementen, vorzugsweise Glastafelzuschnitten (2),
b) eine der Aufnahmestation (8) in eine Verarbeitungsreihenfolge nachgeordnete, separate Sortierstation (9),
wobei die Sortierstation (9) zumindest eine Fächergestellreihe (15;16) mit jeweils mehreren nebeneinander angeordneten Fächergestellen (10) aufweist, wobei es sich bei einem Teil der Fächergestelle (10) um Fächergestelle (10) mit den darin aufgenommenen, unsortierten plattenförmigen Elementen, vorzugsweise Glastafelzuschnitten (2), aus der Aufnahmestation (8) handelt, und wobei die Sortierstation (9) zumindest ein Sortiershuttle (17), das entlang einer fest vorgegebenen Verfahrbahn parallel zu der Fächergestellreihe (15;16), vorzugsweise automatisiert, hin- und her verfahrbar ist, zum Einsortieren der unsortierten plattenförmigen Elementen, vorzugsweise der unsortierten Glastafelzuschnitte (2), aus den mit den unsortierten plattenförmigen Elementen, vorzugsweise Glastafelzuschnitten (2), befüllten Fächergestellen (10) in andere Fächergestelle (10) der Sortierstation (9), aufweist.

2. Sortiervorrichtung (4) nach Anspruch 1,
**dadurch gekennzeichnet, dass**
a) die Sortiervorrichtung (4) Antriebs- und Steuermittel zum automatisierten Verfahren der Fächergestelle (10) aus der Aufnahmestation (8) zur Sortierstation (9) aufweist,
und/oder
b) die Sortierstation (9) eine erste und eine zweite Fächergestellreihe (15;16) mit jeweils mehreren nebeneinander angeordneten Fächergestellen (10) aufweist und das Sortiershuttle (17) zwischen der ersten und der zweiten Fächergestellreihe (15;16) angeordnet ist, und/oder
c) die Sortierstation (9), vorzugsweise das Sortiershuttle (17), Mittel aufweist, mit denen die plattenförmigen Elemente, vorzugsweise Glastafelzuschnitte (2), von den Fächergestellen (10) auf das Sortiershuttle (17) und von dem Sortiershuttle (17) in die Fächergestelle (10) beförderbar sind.

3. Sortiervorrichtung (4) nach einem der vorhergehenden Ansprüche, **dadurch gekennzeichnet, dass**
a) die Fächergestelle (10) mehrere, vorzugsweise mindestens 20, bevorzugt mindestens 50, Fächer zur Aufnahme der plattenförmigen Elemente, vorzugsweise Glastafelzuschnitte (2), aufweisen, wobei die plattenförmigen Elemente, vorzugsweise Glastafelzuschnitte (2), in den Fächern vertikal oder zur Vertikalen geneigt angeordnet sind, und/oder
b) es sich bei den Fächergestellen (10) um Fächerwagen mit Rädern handelt,
und/oder
c) die Sortiervorrichtung (4) fahrerlose Transportfahrzeuge zum Verfahren der Fächergestelle (10) aufweist.

4. Sortiervorrichtung (4) nach einem der vorhergehenden Ansprüche, **dadurch gekennzeichnet, dass**
die Aufnahmestation (8) zumindest ein ihrer Fächergestellreihe (12) in einer Verarbeitungsreihenfolge vorgeordnetes Aufnahme- und Übergabeshuttle (11) zur Aufnahme jeweils zumindest eines plattenförmigen Elements, vorzugsweise eines Glastafelzuschnitts (2), aus der Schneidanlage (3a;b) und zur Übergabe des plattenförmigen Elements, vorzugsweise Glastafelzuschnitts (2), an eines der Fächergestelle (10) der Aufnahmestation (8) aufweist,
wobei vorzugsweise
a) das Aufnahme- und Übergabeshuttle (11) parallel zu der Fächergestellreihe (12) in eine horizontale Shuttleförderrichtung (13), bevorzugt automatisiert, auf einer festen Verfahrbahn hin- und her verfahrbar ist, und/oder
b) das Aufnahme- und Übergabeshuttle (11) Mittel, bevorzugt einen oder mehrere Greifer, aufweist, mit denen ein plattenförmiges Element, vorzugsweise ein Glastafelzuschnitt (2), auf das Aufnahme- und Übergabeshuttle (11) und von dem Aufnahme- und Übergabeshuttle (11) in die Fächergestelle (10) beförderbar ist.

5. Sortiervorrichtung (4) nach einem der vorhergehenden Ansprüche, **dadurch gekennzeichnet, dass**
das Sortiershuttle (17) und/oder das Aufnahme- und Übergabeshuttle (11) jeweils höchstens 10, bevorzugt höchstens 5, Fächer zur Aufnahme der plattenförmigen Elemente, vorzugsweise der Glastafelzuschnitte (2), aufweist,
wobei vorzugsweise das Sortiershuttle (17) und/oder das Aufnahme- und Übergabeshuttle (11) jeweils lediglich ein einziges Fach oder lediglich zwei Fächer zur Aufnahme der plattenförmigen Elemente, vorzugsweise der Glastafelzuschnitte (2), aufweisen.

6. Sortiervorrichtung (4) nach einem der vorhergehenden Ansprüche, **dadurch gekennzeichnet, dass**
a) die plattenförmigen Elemente, vorzugsweise die Glastafelzuschnitte (2), in dem Sortiershuttle (17) und/oder dem Aufnahme- und Übergabeshuttle (11) vertikal oder zur Vertikalen geneigt angeordnet sind, und/oder
b) die Aufnahmestation (8), insbesondere das Aufnahme- und Übergabeshuttle (11) und die Fächergestelle (10), und/oder die Sortierstation (9), insbesondere das Sortiershuttle (17) und die Fächergestelle (10), mehrstöckig, bevorzugt doppelstöckig ausgebildet sind, und/oder
c) das Sortiershuttle (17) und/oder das Aufnahme- und Übergabeshuttle (11) ein um eine vertikale Achse drehbares Oberteil aufweist, so dass die plattenförmigen Elemente, vorzugsweise die Glastafelzuschnitte (2), mittels des Shuttles (11;17) um 180° drehbar sind.

7. Sortiervorrichtung (4) nach einem der vorhergehenden Ansprüche, **dadurch gekennzeichnet, dass**
die Aufnahmestation (8) eine ortsfeste Speichereinrichtung (24) aufweist, die neben der Fächergestellreihe (12) angeordnet ist, so dass die plattenförmigen Elemente, vorzugsweise die Glastafelzuschnitte (2), alternativ, insbesondere mittels des Aufnahme- und Übergabeshuttles (11), an die Speichereinrichtung (24) übergebbar sind,
wobei die Sortiervorrichtung (4) vorzugsweise eine weitere Sortierstation (30) aufweist, die zumindest eine weitere Fächergestellreihe (26) mit jeweils mehreren nebeneinander angeordneten Fächergestellen (10) aufweist, und wobei die weitere Sortierstation (30) zumindest ein weiteres Sortiershuttle (27), das entlang einer fest vorgegebenen Verfahrbahn parallel zu der Fächergestellreihe (26), vorzugsweise automatisiert, hin- und her verfahrbar ist, zum Einsortieren der unsortierten plattenförmigen Elemente, vorzugsweise der unsortierten Glastafelzuschnitte (2), aus der mit den unsortierten plattenförmigen Elementen, vorzugsweise Glastafelzuschnitten (2), befüllten Speichereinrichtung (24) in die Fächergestelle (10) der weiteren Sortierstation (30), aufweist.

8. Sortierverfahren zum Sortieren von plattenförmigen Elementen, vorzugsweise von, vorzugsweise aus einer Schneidanlage (3a;b) kommenden, Glastafelzuschnitten (2), vorzugsweise unter Verwendung einer Sortiervorrichtung (4) gemäß einem der vorhergehenden Ansprüche, mit folgenden Verfahrensschritten:
a) Unsortiertes bzw. chaotisches Befüllen von Fächergestellen (10), bevorzugt Fächerwagen, einer Aufnahmestation (8) mit den plattenförmigen Elementen, vorzugsweise Glastafelzuschnitten (2),
b) Verfahren der mit den unsortierten plattenförmigen Elementen, vorzugsweise Glastafelzuschnitten (2), befüllten Fächergestelle (10), zu einer Sortierstation (9) und Einreihen der Fächergestelle (10) in eine Fächergestellreihe (15) der Sortierstation (9),
c) Einsortieren der plattenförmigen Elemente, vorzugsweise Glastafelzuschnitte (2), in der Sortierstation (9) aus den mit den unsortierten plattenförmigen Elementen, vorzugsweise Glastafelzuschnitten (2), befüllten Fächergestellen (10) in andere Fächergestelle (10) der Sortierstation (9) mittels zumindest einem parallel zu der Fächergestellreihe (15) der Sortierstation (9), vorzugsweise automatisiert, hin- und her verfahrenden Sortiershuttle (17).

9. Sortierverfahren nach Anspruch 8,
**dadurch gekennzeichnet, dass**
a) das sortierende Befüllen der Fächergestelle (10) automatisiert gesteuert mittels des automatisiert verfahrenden Sortiershuttles (17) erfolgt, und/oder
b) zum Sortieren die unsortierten plattenförmigen Elemente, vorzugsweise die Glastafelzuschnitte (2), jeweils aus einem mit den unsortierten plattenförmigen Elementen, vorzugsweise Glastafelzuschnitten (2), befüllten Fächergestell (10) auf das Sortiershuttle (17) gefördert werden, von dem Sortiershuttle (17) zu einem der weiteren Fächergestelle (10) verfahren werden und anschließend aus dem Sortiershuttle (17) in das weitere Fächergestell (10) einsortiert werden,
und/oder
c) die Fächergestelle (10) der Sortierstation (9) zum sortierenden Befüllen der Fächergestelle (10) nicht verfahren werden.

10. Sortierverfahren nach Anspruch 8 oder 9,
**dadurch gekennzeichnet, dass**
a) die Fächergestelle (10) in der Aufnahmestation (8) mit den plattenförmigen Elementen, vorzugsweise Glastafelzuschnitten (2), in chaotischer Reihenfolge befüllt werden,
und/oder
b) die mit den sortierten plattenförmigen Elementen, vorzugsweise Glastafelzuschnitten (2), befüllten Fächergestelle (10), bevorzugt automatisiert, zu einer Weiterbearbeitungsanlage (5;22a;b) verfahren werden, und/oder
c) das Aufnahme- und Übergabeshuttle (11) und/oder das Sortiershuttle (17) ein Fächergestell (10) jeweils mit mehreren plattenförmigen Elementen, vorzugsweise Glastafelzuschnitten (2), gleichzeitig, vorzugsweise mit zwei plattenförmigen Elementen, vorzugsweise Glastafelzuschnitten (2), gleichzeitig, befüllen,
und/oder
d) das Sortiershuttle (17) aus einem Fächergestell (10) jeweils mit mehreren plattenförmigen Elementen, vorzugsweise Glastafelzuschnitten (2), gleichzeitig, vorzugsweise mit zwei plattenförmigen Elementen, vorzugsweise Glastafelzuschnitten (2), gleichzeitig, befüllt wird.

11. Vorrichtung (1) zur Herstellung von Glastafelzuschnitten (2) mit zumindest einer Schneidanlage (3a;b) zum Schneiden von Glasrohtafeln in einzelne Glastafelzuschnitte (2), einer der Schneidanlage (3a;b) nachgeordneten Sortiervorrichtung (4) zum Sortieren der Glastafelzuschnitte (2) und mit zumindest einer Weiterbearbeitungsanlage (5;22a;b) zur Weiterbearbeitung der sortierten Glastafelzuschnitte (2),
**dadurch gekennzeichnet, dass**
die Vorrichtung (1) eine Sortiervorrichtung (4) gemäß einem der Ansprüche 1 bis 7 aufweist.

12. Vorrichtung nach Anspruch 11,
**dadurch gekennzeichnet, dass**
a) es sich bei der Weiterbearbeitungsanlage (5) um eine Isolierglaslinie (22a) zur Weiterbearbeitung von Glastafelzuschnitten (2) aus Isolierglas und/oder eine Tempervorrichtung (22b) zum Tempern von Glastafelzuschnitten (2) aus Floatglas und/oder um eine Vorrichtung zur Kantenbearbeitung handelt,
und/oder
b) die Vorrichtung (1) Antriebs- und Steuermittel zum automatisierten Verfahren der Fächergestelle (10) aus der Sortierstation (9) zur jeweiligen Weiterbearbeitungsanlage (5;22a;22b) aufweist, und/oder
c) die Vorrichtung (1) ein der Sortiervorrichtung (4) vorgeordnetes Fördermittel (7), insbesondere einen Pufferförderer, zur Übergabe eines einzelnen Glastafelzuschnittes (2) oder mehrerer Glastafelzuschnitte (2) gleichzeitig an die Sortiervorrichtung (4), vorzugsweise an das Aufnahme- und Übergabeshuttle (11), aufweist.

13. Vorrichtung (1) nach Anspruch 11 oder 12,
**dadurch gekennzeichnet, dass**
a) die Vorrichtung (1) zumindest eine der Sortiervorrichtung (4) nachgeordnete Übergabeeinrichtung (23) zur Übergabe eines einzelnen Glastafelzuschnitts (2) oder mehrerer sortierter Glastafelzuschnitte (2) gleichzeitig an die zumindest eine Weiterbearbeitungsanlage (5;22a;22b), aufweist,
und/oder
b) die Vorrichtung (1) eine mehrstöckige, bevorzugt doppelstöckige, Einlaufstrecke (25) aufweist, in der die Glastafelzuschnitte (2) mehrstöckig, bevorzugt zweistöckig, zur Sortiervorrichtung (4) befördert werden.

14. Verfahren zur Herstellung von Glastafelzuschnitten (2), vorzugsweise unter Verwendung einer Vorrichtung gemäß einem der Ansprüche 11 bis 13, wobei Glasrohtafeln in einzelne Glastafelzuschnitte (2) zerteilt werden, die Glastafelzuschnitte (2) sortiert und anschließend weiter bearbeitet werden,
**dadurch gekennzeichnet, dass**
das Sortieren der Glastafelzuschnitte (2) gemäß dem Sortierverfahren gemäß einem der Ansprüche 8 bis 10 erfolgt.

15. Verfahren nach Anspruch 14,
**dadurch gekennzeichnet, dass**
a) die zerteilten Glastafelzuschnitte (2) einzeln oder mehrere zerteilte Glastafelzuschnitte (2) gleichzeitig an die Aufnahmestation (8), vorzugsweise an das Aufnahme- und Übergabeshuttle (11), übergeben werden,
und/oder
b) die sortierten Glastafelzuschnitte (2) einzeln oder mehrere sortierte Glastafelzuschnitte (2) gleichzeitig an die zumindest eine Weiterbearbeitungsanlage (5;22a;22b) übergeben werden.

## Claims

1. A sorting device (4) for sorting plate-shaped elements, preferably glass sheet cut pieces (2), comprising:
a) a receiving station (8) having a plurality of compartmented frames (10), preferably situated alongside one another in a compartmented frame row (12), having unsorted plate-shaped elements received therein, preferably glass sheet cut pieces (2),
b) a separate sorting station (9) situated after the receiving station (8) in a processing sequence,
the sorting station (9) comprising at least one compartmented frame row (15;16), respectively having a plurality of compartmented frames (10) situated alongside one another, a portion of the compartmented frames (10) being compartmented frames (10) having the unsorted plate-shaped elements, preferably glass sheet cut pieces (2), from the receiving station (8) received therein, and the sorting station (9) comprising at least one sorting shuttle (17) that is movable back and forth along a fixedly defined track parallel to the compartmented frame row (15;16), preferably in automated fashion, for the sorting of the unsorted plate-shaped elements, preferably the unsorted glass sheet cut pieces (2), from the compartmented frames (10) filled with the unsorted plate-shaped elements, preferably glass sheet cut pieces (2), into other compartmented frames (10) of the sorting station (9).

2. The sorting device (4) according to Claim 1,
**characterized in that**
a) the sorting device (4) comprises drive and control means for the automated movement of the compartmented frames (10) from the receiving station (8) to the sorting station (9),
and/or
b) the sorting station (9) comprises a first and a second compartmented frame row (15;16),respectively having a plurality of compartmented frames (10) situated alongside one another, and the sorting shuttle (17) is situated between the first and the second compartmented frame row (15;16),
and/or
c) the sorting station (9), preferably the sorting shuttle (17), comprises means with which the plate-shaped elements, preferably glass sheet cut pieces (2), can be conveyed from the compartmented frames (10) onto the sorting shuttle (17) and from the sorting shuttle (17) into the compartmented frames (10).

3. The sorting device (4) according to one of the preceding claims, **characterized in that**
a) the compartmented frames (10) comprise a plurality of, preferably at least 20, preferably at least 50, compartments for receiving the plate-shaped elements, preferably glass sheet cut pieces (2), the plate-shaped elements, preferably glass sheet cut pieces (2), being situated in the compartments vertically or inclined relative to the vertical,
and/or
b) the compartmented frames (10) are harp racks having wheels,
and/or
c) the sorting device (4) comprises driverless transport vehicles for moving the compartmented frames (10).

4. The sorting device (4) according to one of the preceding claims, **characterized in that**
the receiving station (8) comprises at least one receiving and transfer shuttle (11), situated before the compartmented frame row (12) of the station in a processing sequence, for respectively receiving at least one plate-shaped element, preferably a glass sheet cut piece (2), from the cutting installation (3a;b), and for transferring the plate-shaped element, preferably the glass sheet cut piece (2), to one of the compartmented frames (10) of the receiving station (8),
wherein preferably
a) the receiving and transfer shuttle (11) is movable back and forth parallel to the compartmented frame row (12) in a horizontal shuttle conveying direction (13) on a fixed track, preferably in automated fashion,
and/or
b) the receiving and transfer shuttle (11) comprises means, preferably one or more grippers, with which a plate-shaped element, preferably a glass sheet cut piece (2), can be conveyed onto the receiving and transfer shuttle (11) and from the receiving and transfer shuttle (11) into the compartmented frames (10).

5. The sorting device (4) according to one of the preceding claims, **characterized in that**
the sorting shuttle (17) and/or the receiving and transfer shuttle (11) respectively comprises at most 10, preferably at most 5, compartments for receiving the plate-shaped elements, preferably the glass sheet cut pieces (2),
wherein preferably the sorting shuttle (17) and/or the receiving and transfer shuttle (11) respectively comprise only a single compartment, or only two compartments, for receiving the plate-shaped elements, preferably the glass sheet cut pieces (2).

6. The sorting device (4) according to one of the preceding claims, **characterized in that**
a) the plate-shaped elements, preferably the glass sheet cut pieces (2), are situated in the sorting shuttle (17) and/or in the receiving and transfer shuttle (11) vertically or inclined relative to the vertical,
and/or
b) the receiving station (8), in particular the receiving and transfer shuttle (11) and the compartmented frames (10), and/or the sorting station (9), in particular the sorting shuttle (17) and the compartmented frames (10), are fashioned having multiple levels, preferably having two levels,
and/or
c) the sorting shuttle (17) and/or the receiving and transfer shuttle (11) comprises an upper part that is rotatable about a vertical axis, so that the plate-shaped elements, preferably the glass sheet cut pieces (2), are rotatable by 180° by the shuttle (11;17).

7. The sorting device (4) according to one of the preceding claims,
**characterized in that**
the receiving station (8) comprises a stationary storage device (24) that is situated next to the compartmented frame row (12), so that the plate-shaped elements, preferably the glass sheet cut pieces (2), can alternatively be transferred to the storage device (24) in particular by the receiving and transfer shuttle (11), wherein the sorting device (4) preferably comprises a further sorting station (30) that comprises at least one further compartmented frame row (26) respectively having a plurality of compartmented frames (10) situated alongside one another, and the further sorting station (30) comprising at least one further sorting shuttle (27) that is movable back and forth along a fixedly defined track parallel to the compartmented frame row (26), preferably in automated fashion, for the sorting of the unsorted plate-shaped elements, preferably the unsorted glass sheet cut pieces (2), from the storage device (24) filled with the unsorted plate-shaped elements, preferably glass sheet cut pieces (2), into the compartmented frames (10) of the further sorting station (30).

8. A sorting method for sorting plate-shaped elements, preferably glass sheet cut pieces (2), preferably coming from a cutting installation (3a;b), preferably using a sorting device (4) according to one of the preceding claims, having the following method steps:
a) unsorted, or random, filling of compartmented frames (10), preferably harp racks, of a receiving station (8) with the plate-shaped elements, preferably glass sheet cut pieces (2),
b) transporting the compartmented frames (10) filled with the unsorted plate-shaped elements, preferably glass sheet cut pieces (2), to a sorting station (9), and queueing the compartmented frames (10) into a compartmented frame row (15) of the sorting station (9),
c) sorting the plate-shaped elements, preferably glass sheet cut pieces (2), in the sorting station (9) from the compartmented frames (10) filled with the unsorted plate-shaped elements, preferably glass sheet cut pieces (2), into other compartmented frames (10) of the sorting station (9), using at least one sorting shuttle (17) that travels back and forth parallel to the compartmented frame row (15) of the sorting station (9), preferably in automated fashion.

9. The sorting method according to Claim 8,
**characterized in that**
a) the sorting filling of the compartmented frames (10) takes place in automated fashion, controlled by the sorting shuttle (17) traveling in automated fashion, and/or
b) for the sorting, the unsorted plate-shaped elements, preferably the glass sheet cut pieces (2), are respectively conveyed from a compartmented frame (10) filled with the unsorted plate-shaped elements, preferably glass sheet cut pieces (2), onto the sorting shuttle (17), are transported by the sorting shuttle (17) to one of the further compartmented frames (10), and are subsequently sorted from the sorting shuttle (17) into the further compartmented frame (10), and/or
c) the compartmented frames (10) of the sorting station (9) are not moved for the sorting filling of the compartmented frames (10).

10. The sorting method according to Claim 8 or 9,
**characterized in that**
a) the compartmented frames (10) in the receiving station (8) are filled with the plate-shaped elements, preferably glass sheet cut pieces (2), in a random sequence,
and/or
b) the compartmented frames (10) filled with the sorted plate-shaped elements, preferably glass sheet cut pieces (2), are transported, preferably in automated fashion, to a further processing installation (5;22a;b),
and/or
c) the receiving and transfer shuttle (11) and/or the sorting shuttle (17) fill a compartmented frame (10) respectively with a plurality of plate-shaped elements, preferably glass sheet cut pieces (2), simultaneously, preferably with two plate-shaped elements, preferably glass sheet cut pieces (2), simultaneously,
and/or
d) the sorting shuttle (17) is filled from a compartmented frame (10) respectively with a plurality of plate-shaped elements, preferably glass sheet cut pieces (2), simultaneously, preferably with two plate-shaped elements, preferably glass sheet cut pieces (2), simultaneously.

11. A device (1) for producing glass sheet cut pieces (2), having at least one cutting installation (3a;b) for cutting glass raw sheets into individual glass sheet cut pieces (2), a sorting device (4), situated after the cutting installation (3a;b), for sorting the glass sheet cut pieces (2), and having at least one further processing installation (5;22a;b) for the further processing of the sorted glass sheet cut pieces (2), **characterized in that**
the device (1) comprises a sorting device (4) according to one of Claims 1 through 7.

12. The device according to Claim 11,
**characterized in that**
a) the further processing installation (5) is an insulating glass production line (22a) for the further processing of glass sheet cut pieces (2) made of insulating glass, and/or is a tempering device (22b) for tempering glass sheet cut pieces (2) made of float glass, and/or is a device for edge processing,
and/or
b) the device (1) comprises drive and control means for the automated transporting of the compartmented frames (10) from the sorting station (9) to the respective further processing installation (5;22a;22b),
and/or
c) the device (1) comprises a conveying means (7), in particular a buffer conveyor, situated before the sorting device (4), for transferring an individual glass sheet cut piece (2) or a plurality of glass sheet cut pieces (2) simultaneously to the sorting device (4), preferably to the receiving and transfer shuttle (11).

13. The device (1) according to Claim 11 or 12,
**characterized in that**
a) the device (1) comprises at least one transfer device (23), situated after the sorting device (4), for transferring an individual glass sheet cut piece (2) or a plurality of sorted glass sheet cut pieces (2) simultaneously to the at least one further processing installation (5;22a;22b),
and/or
b) the device (1) comprises a multilevel, preferably two-level, run-in segment (25) in which the glass sheet cut pieces (2) are conveyed in multiple levels, preferably in two levels, to the sorting device (4).

14. A method for producing glass sheet cut pieces (2), preferably using a device according to one of Claims 11 through 13, in which glass raw sheets are divided into individual glass sheet cut pieces (2), and the glass sheet cut pieces (2) are sorted and are subsequently further processed,
**characterized in that**
the sorting of the glass sheet cut pieces (2) takes place according to the sorting method according to one of Claims 8 through 10.

15. The method according to Claim 14,
**characterized in that**
a) the divided glass sheet cut pieces (2) are transferred individually, or a plurality of divided glass sheet cut pieces (2) are transferred simultaneously, to the receiving station (8), preferably to the receiving and transfer shuttle (11),
and/or
b) the sorted glass sheet cut pieces (2) are transferred individually, or a plurality of sorted glass sheet cut pieces (2) are transferred simultaneously, to the at least one further processing installation (5;22a;22b).

## Revendications

1. Dispositif de triage (4) pour le triage d'éléments en forme de plaque, de préférence d'ébauches de panneau de verre (2), présentant :
a) une station de réception (8) avec plusieurs supports à compartiment (10) agencés de préférence dans une rangée de supports à compartiment (12) les uns à côté des autres avec des éléments en forme de plaque non triés, reçus dedans, de préférence des ébauches de panneau de verre (2),
b) une station de triage (9) séparée agencée en aval de la station de réception (8) dans un ordre de traitement,
dans lequel la station de triage (9) présente au moins une rangée de supports à compartiment (15;16) avec respectivement plusieurs supports à compartiment (10) agencés les uns à côté des autres, dans lequel il s'agit pour une partie des supports à compartiment (10) de supports à compartiment (10) avec les éléments en forme de plaque non triés, reçus dedans, de préférence les ébauches de panneau de verre (2), provenant de la station de réception (8), et dans lequel la station de triage (9) présente au moins une navette de triage (17) qui est déplaçable alternativement, de préférence de manière automatisée, le long d'une bande de déplacement prédéfinie fixement parallèlement à la rangée de supports à compartiment (15 ; 16), pour le triage des éléments en forme de plaque non triés, de préférence des ébauches de panneau de verre (2) non triées, des supports à compartiment (10) remplis des éléments en forme de plaque, non triés, de préférence des ébauches de panneau de verre (2) dans d'autres supports à compartiment (10) de la station de triage (9).

2. Dispositif de triage (4) selon la revendication 1,
**caractérisé en ce que**
a) le dispositif de triage (4) présente des moyens d'entraînement et de commande pour le déplacement automatisé des supports à compartiment (10) de la station de réception (8) à la station de triage (9),
et/ou
b) la station de triage (9) présente une première et une seconde rangée de supports à compartiment (15;16) avec respectivement plusieurs supports à compartiment (10) agencés les uns à côté des autres et la navette de triage (17) est agencée entre la première et la seconde rangée de supports à compartiment (15 ; 16),
et/ou
c) la station de triage (9), de préférence la navette de triage (17), présente des moyens, avec lesquels les éléments en forme de plaque, de préférence les ébauches de panneau de verre (2), peuvent être transportés des supports à compartiment (10) sur la navette de triage (17) et de la navette de triage (17) dans les supports à compartiment (10).

3. Dispositif de triage (4) selon l'une quelconque des revendications précédentes,
**caractérisé en ce que**
a) les supports à compartiment (10) présentent plusieurs, de préférence au moins 20, de préférence au moins 50, compartiments pour la réception des éléments en forme de plaque, de préférence des ébauches de panneau de verre (2), dans lequel les éléments en forme de plaque, de préférence les ébauches de panneau de verre (2), sont agencés dans les compartiments de manière verticale ou inclinée par rapport à la verticale,
et/ou
b) il s'agit pour les supports à compartiment (10) de chariots à compartiments avec des roues,
et/ou
c) le dispositif de triage (4) présente des véhicules de transport sans conducteur pour le déplacement des supports à compartiment (10).

4. Dispositif de triage (4) selon l'une quelconque des revendications précédentes,
**caractérisé en ce que**
la station de réception (8) présente au moins une navette de réception et de remise (11) agencée en amont de sa rangée de supports à compartiment (12) dans un ordre de traitement pour la réception respectivement au moins d'un élément en forme de plaque, de préférence d'une ébauche de panneau de verre (2), hors de l'installation de coupe (3a ; b) et pour la remise de l'élément en forme de plaque, de préférence de l'ébauche de panneau de verre (2), à un des supports à compartiment (10) de la station de réception (8),
dans lequel de préférence
a) la navette de réception et de remise (11) est déplaçable alternativement parallèlement à la rangée de supports à compartiment (12) dans un sens de transport de navette (13) horizontal, de préférence de manière automatisée, sur une bande de déplacement fixe, et/ou
b) la navette de réception et de remise (11) présente des moyens, de préférence une ou plusieurs pinces, avec lesquels un élément en forme de plaque, de préférence une ébauche de panneau de verre (2), peut être transporté sur la navette de réception et de remise (11) et de la navette de réception et de remise (11) dans les supports à compartiment (10).

5. Dispositif de triage (4) selon l'une quelconque des revendications précédentes,
**caractérisé en ce que**
la navette de triage (17) et/ou la navette de réception et de remise (11) présente respectivement au plus 10, de préférence au plus 5, compartiments pour la réception des éléments en forme de plaque, de préférence des ébauches de panneau de verre (2),
dans lequel de préférence la navette de triage (17) et/ou la navette de réception et de remise (11) présentent respectivement juste un seul compartiment ou juste deux compartiments pour la réception des éléments en forme de plaque, de préférence des ébauches de panneau de verre (2).

6. Dispositif de triage (4) selon l'une quelconque des revendications précédentes,
**caractérisé en ce que**
a) les éléments en forme de plaque, de préférence les ébauches de panneau de verre (2), sont agencés dans la navette de triage (17) et/ou la navette de réception et de remise (11) de manière verticale ou inclinée par rapport à la verticale, et/ou
b) la station de réception (8), en particulier la navette de réception et de remise (11) et les supports à compartiment (10), et/ou la station de triage (9), en particulier la navette de triage (17) et les supports à compartiment (10) sont réalisés à plusieurs étages, de préférence à double étage,
et/ou
c) la navette de triage (17) et/ou la navette de réception et de remise (11) présente une partie supérieure rotative autour d'un axe vertical de sorte que les éléments en forme de plaque, de préférence les ébauches de panneau de verre (2), soient rotatifs au moyen de la navette (11 ; 17) de 180°.

7. Dispositif de triage (4) selon l'une quelconque des revendications précédentes,
**caractérisé en ce que**
la station de réception (8) présente un dispositif de stockage (24) fixe qui est agencé à côté de la rangée de supports à compartiment (12) de sorte que les éléments en forme de plaque, de préférence les ébauches de panneau de verre (2), puissent être transmis en variante, en particulier au moyen de la navette de réception et de remise (11), au dispositif de stockage (24),
dans lequel le dispositif de triage (4) présente de préférence une autre station de triage (30) qui présente au moins une autre rangée de supports à compartiment (26) avec respectivement plusieurs supports à compartiment (10) agencés les uns à côté des autres, et dans lequel l'autre station de triage (30) présente une navette de triage (27) déplaçable alternativement le long d'une bande de déplacement fixement prédéfinie parallèlement à la rangée de supports à compartiment (26), de préférence de manière automatisée, pour le triage des éléments en forme de plaque non triés, de préférence des ébauches de panneau de verre (2) non triées, du dispositif de stockage (24) rempli des éléments en forme de plaque non triés, de préférence des ébauches de panneau de verre (2) dans les supports à compartiment (10) de l'autre station de triage (30).

8. Procédé de triage pour le triage d'éléments en forme de plaque, de préférence d'ébauches de panneau de verre (2), venant de préférence d'une installation de coupe (3a ; b), de préférence en utilisant un dispositif de triage (4) selon l'une quelconque des revendications précédentes, avec les étapes de procédé suivantes :
a) le remplissage non trié ou chaotique de supports à compartiment (10), de préférence de chariots à compartiment, d'une station de réception (8) avec les éléments en forme de plaque, de préférence les ébauches de panneau de verre (2),
b) le déplacement des supports à compartiment (10) remplis avec les éléments en forme de plaque non triés, de préférence les ébauches de panneau de verre (2) à une station de triage (9) et la mise en rangée des supports à compartiment (10) dans une rangée de supports à compartiment (15) de la station de triage (9),
c) le triage des éléments en forme de plaque, de préférence des ébauches de panneau de verre (2), dans la station de triage (9) des supports à compartiment (10) remplis des éléments en forme de plaque non triés, de préférence des ébauches de panneau de verre (2) en d'autres supports à compartiment (10) de la station de triage (9) au moyen d'au moins une navette de triage (17) se déplaçant alternativement parallèlement à la rangée de supports à compartiment (15) de la station de triage (9), de préférence de manière automatisée.

9. Procédé de triage selon la revendication 8,
**caractérisé en ce que**
a) le remplissage de triage des supports à compartiment (10) est effectué de manière commandée et automatisée au moyen de la navette de triage (17) se déplaçant de manière automatisée,
et/ou
b) pour le triage les éléments en forme de plaque non triés, de préférence les ébauches de panneau de verre (2), sont transportés respectivement d'un support à compartiment (10) rempli avec les éléments en forme de plaque non triés, de préférence les ébauches de panneau de verre (2) sur la navette de triage (17), sont déplacés de la navette de triage (17) à un des autres supports à compartiment (10) et sont ensuite triés de la navette de triage (17) dans l'autre support à compartiment (10),
et/ou
c) les supports à compartiment (10) de la station de triage (9) ne sont pas déplacés pour le remplissage de triage des supports à compartiment (10).

10. Procédé de triage selon la revendication 8 ou 9,
**caractérisé en ce que**
a) les supports à compartiment (10) dans la station de réception (8) sont remplis des éléments en forme de plaque, de préférence des ébauches de panneau de verre (2), dans l'ordre chaotique,
et/ou
b) les supports à compartiment (10) remplis des éléments en forme de plaque triés, de préférence des ébauches de panneau de verre (2), sont déplacés de manière automatisée, à une installation de traitement ultérieur (5 ; 22a ; b),
et/ou
c) la navette de réception et de remise (11) et/ou la navette de triage (17) remplit un support à compartiment (10) respectivement avec plusieurs éléments en forme de plaque, de préférence ébauches de panneau de verre (2), simultanément, de préférence avec deux éléments en forme de plaque, de préférence ébauches de panneau de verre (2), simultanément,
et/ou
d) la navette de triage (17) à partir d'un support à compartiment (10) est remplie respectivement avec plusieurs éléments en forme de plaque, de préférence ébauches de panneau de verre (2), simultanément, de préférence avec deux éléments en forme de plaque, de préférence ébauches de panneau de verre (2), simultanément.

11. Dispositif (1) pour la fabrication d'ébauches de panneau de verre (2) avec au moins une installation de coupe (3a ; b) pour la coupe de panneaux de verre bruts en ébauches de panneau de verre individuelles (2), un dispositif de triage (4) agencé en aval de l'installation de coupe (3a ; b) pour le triage des ébauches de panneau de verre (2) et avec au moins une installation de traitement ultérieur (5 ; 22a ; b) pour le traitement ultérieur des ébauches de panneau de verre (2) triées,
**caractérisé en ce que**
le dispositif (1) présente un dispositif de triage (4) selon l'une quelconque des revendications 1 à 7.

12. Dispositif selon la revendication 11,
**caractérisé en ce que**
a) il s'agit pour l'installation de traitement ultérieur (5) d'une ligne de verre isolant (22a) pour le traitement ultérieur d'ébauches de panneau de verre (2) en verre isolant et/ou d'un dispositif de trempe (22b) pour la trempe d'ébauches de panneau de vitre (2) en verre plat et/ou d'un dispositif de finition de bords,
et/ou
b) le dispositif (1) présente des moyens d'entraînement et de commande pour le déplacement automatisé des supports à compartiment (10) de la station de triage (9) à l'installation de traitement ultérieur (5 ; 22a ; 22b) respective,
et/ou
c) le dispositif (1) présente un moyen de transport (7) agencé en amont du dispositif de triage (4), en particulier un transporteur tampon, pour la remise d'une ébauche de panneau de verre (2) individuelle ou plusieurs ébauches de panneau de verre (2) simultanément au dispositif de triage (4), de préférence à la navette de réception et de remise (11).

13. Dispositif (1) selon la revendication 11 ou 12,
**caractérisé en ce que**
a) le dispositif (1) présente au moins un dispositif de remise (23) agencé en aval du dispositif de triage (4) pour la remise d'une ébauche de panneau de verre (2) individuelle ou plusieurs ébauches de panneau de verre (2) triées simultanément à l'au moins une installation de traitement ultérieur (5 ; 22a ; 22b),
et/ou
b) le dispositif (1) présente un trajet d'entrée (25) à plusieurs étages, de préférence à double étage, dans lequel les ébauches de panneau de verre (2) sont transportées sur plusieurs étages, de préférence deux étages, jusqu'au dispositif de triage (4).

14. Procédé de fabrication d'ébauches de panneau de verre (2), de préférence en utilisant un dispositif selon l'une quelconque des revendications 11 à 13, dans lequel des panneaux de verre bruts sont divisés en ébauches de panneau de verre (2) individuelles, les ébauches de panneau de verre (2) sont triées et ensuite encore usinées,
**caractérisé en ce que**
le triage des ébauches de panneau de verre (2) est effectué selon le procédé de triage selon l'une quelconque des revendications 8 à 10.

15. Procédé selon la revendication 14,
**caractérisé en ce que**
a) les ébauches de panneau de verre (2) divisées individuellement ou plusieurs ébauches de panneau de verre (2) divisées sont remises simultanément à la station de réception (8), de préférence à la navette de réception et de remise (11), et/ou
b) les ébauches de panneau de verre (2) triées individuellement ou plusieurs ébauches de panneau de verre (2) triées sont remises simultanément à l'au moins une installation de traitement ultérieur (5 ; 22a ; 22b).
